# EUROPÄISCHE PATENTSCHRIFT

(11) **EP 1 070 783 B1**
(45) Veröffentlichungstag und Bekanntmachung des Hinweises auf die Patenterteilung: **05.03.2003**
(21) Anmeldenummer: 99113940.3
(22) Anmeldetag: 16.07.1999
(51) Int. Cl.: D21C 5/02, D21C 9/08, D21H 21/02

(54) **Verfahren zum Optimieren der Umlademitteldosierung von Papierrückstoff**
Process to optimize the dosage of fixing agent for coated broke pulp
Procédé pour l'optimisation du dosage d'agent de fixation pour la pâte de cassé revêtu

(43) Veröffentlichungstag der Anmeldung: 24.01.2001
(73) Patentinhaber: Nordland Papier GmbH, 26892 Dörpen (DE)
(72) Erfinder: Jörn, Joachim, 26892 Dörpen (DE)
(74) Vertreter: Glawe, Delfs, Moll & Partner

(56) Entgegenhaltungen:
- EP-A- 0 444 788
- CA-A- 2 110 190

## Beschreibung

Die Erfindung betrifft ein Verfahren zum Optimieren der Umlademitteldosierung von Rückstoff in Form einer Suspension von in einer Streichmaschine behandeltem, erneut in die Produktionslinie einzubringenden Papier.

Bei der Herstellung von Papier entstehen unweigerlich Ausschuß und Restmengen bei Beginn und Ende einer Papierbahn, beim Herstellen von Papierformaten usw. Diese beträchtlichen Papiermengen können wiederverwertet werden, stellen insofern keinen "Abfall" dar und werden hier als "Rückstoff" bezeichnet. Damit dieser Rückstoff wieder zu Papier verarbeitet werden kann, wird er in einem entsprechenden Pulper zu einer Suspension von Papierfasern zerkleinert, die in die Produktionslinie mit anderen Zellstoffmaterialien zusammen zur Herstellung von neuem Papier eingebracht werden kann. In einer großen Papierfabrik fallen große Mengen von Rückstoff an, so daß es nicht nur ein ökologisches, sondern auch wirtschaftliches Gebot ist, den Rückstoff tatsächlich wieder für die Papierproduktion zu verwenden.

Hochwertige Papiere, z.B. holzfreie Papiere in Form von maschinenglatten oder satinierten Naturpapieren werden aus Zellstoffen hergestellt, die aus Kurzfaser- und Langfaserzellstoff bestehen. Als Füllstoff dient Calciumcarbonat. Mit kationischer Stärke wird die Oberfläche der Naturpapiere bzw. Rohpapiere präpariert, wodurch eine gute Weiterverarbeitbarkeit gewährleistet ist. Als weitere Hilfsmittel kommen Retentionsmittel, Dimerketen für die Masseleimung sowie Farbstoffe und optische Aufheller zum Einsatz. Die genannten Stoffe sind Bestandteil einer im Laufe der Zeit optimierten Palette gut aufeinander abgestimmter Roh- und Hilfsstoffe und verursachen im Papierherstellungsprozeß keinerlei Schwierigkeiten. Es treten auch keinerlei Schwierigkeiten auf, wenn Rückstoffe aus solchen Papieren wieder der Produktionslinie zugeführt werden.

Für viele Zwecke reichen solche Papiere trotz ihrer Hochwertigkeit nicht aus. So sind zum Bilderdruck zweiseitig doppelt gestrichene Bilderdruckpapiere in matter oder glänzender Ausführung erforderlich. Die Papiere werden mit einer Streichmasse beschichtet, die verschiedene synthetische Bindemittel enthält. Die Zurückführung gestrichener Papiere ins Rückstoffsystem stellt ein großes Problem dar, da die Bindemittel dazu neigen, sich zu größeren Agglomeraten zusammenzuschließen. Dies würde an den Papiermaschinen bei Verwendung des gestrichenen Rückstoffs zu Ablagerungen auf Walzen, Zylindern und Bespannungen führen. Auch die Papierqualität und die Weiterverarbeitbarkeit würden dadurch stark beeinträchtigt. Durch Agglomerate der Bindemittel könnte man z.B. ein Loch im Papier erhalten, durch das die Farbe beim Streichen durch das Papier hindurch auf die Walze gelangt, wodurch das Papier abreißt. Auch bei Drucken bereiten solche Einschlüsse Probleme. Es können auch Klumpen am Papier haften, da die Latexteilchen, die in der Streichmasse enthalten sind, zusammenkleben. Die Streichmasse wird dabei in relativ großer Menge auf das Papier aufgebracht. 30% des fertigen Papiers sind Streichmasse, von denen wiederum 10% Latex ist. Bei der Wiederverwertung des gestrichenen Papiers treten also erhebliche Schwierigkeiten auf.

Um auch Rückstoff aus gestrichenem Papier wiederverwerten zu können, ist es bekannt, ein Umlademittel oder einen Fixierer der Rückstoffsuspension beizugeben. Diese Umlademittel werden auch Störstoffbekämpfer oder Fixiermittel genannnt. Die Dosierung des Umlademittels muß sehr genau erfolgen. Fügt man zuwenig Umlademittel bei, so wird die gewünschte Wirkung nicht erzielt. Zuviel Umlademittel ist unwirtschaftlich und führt zu ungünstigen Wechselwirkungen während der Papierherstellung.

Der Ladungszustand der Rückstoffsuspension aus gestrichenem Papier findet sich in einem stark anionischen Bereich. Um einen Ladungsausgleich zwischen den Partialladungen zu schaffen, wodurch die obigen Probleme des Bindemittels beseitigt werden, wird ein kationisches Umlademittel zudosiert, bis ein angestrebter Ladungszustand erreicht wird.

Um die richtige Dosierung zu bestimmen, ist es bekannt, Messungen mit Hilfe eines Titrationsvorgangs zur Bestimmung des kationischen Bedarfs durchzuführen. Voraussetzung hierfür ist die Gewinnung eines Filtrats aus der Rückstoffsuspension.

Diese gestaltet sich jedoch aufgrund der sich stetig ändernden Stoffdichte als wenig reproduzierbar und sehr störanfällig. Außerdem ist bei den entsprechenden Geräten ein erheblicher Wartungsaufwand notwendig, um einen kontinuierlichen Online Einsatz zu gewährleisten. Solche Messungen müssen aber dauernd durchgeführt werden, um Änderungen in der Rückstoffqualität sofort zu berücksichtigen. Diese Änderungen können sehr beträchtlich sein, da häufig dem Rückstoff aus gestrichenem Papier mehr oder weniger große Mengen von Rückstoff aus Naturpapier hinzugefügt werden, so daß sich die im Rückstoff enthaltene Bindemittelkonzentration stark ändert, was selbstverständlich auch eine starke Änderung der Umlademitteldosierung erfordert.

Die Aufgabe der Erfindung besteht in der Schaffung eines Verfahrens, mit dem die Umlademitteldosierung schnell und genau auch bei stark sich ändernden Anteilen von gestrichenem Papier im Rückstoff optimiert werden kann.

Die Erfindung geht dabei von der Erkenntnis aus, daß sich die Trübung einer Suspension ändert, wenn das Umlademittel hinzugefügt wird. Messungen haben gezeigt, daß eine sehr gute Korrelation zwischen der Ladungsänderung aufgrund der Zugabe eines Umlademittels und der Trübungsreduzierung besteht.

Auf dieser Erkenntnis beruhend besteht die erfindungsgemäße Lösung darin, daß vom Hauptstrom des Rückstoffs ein Teilstrom abgezweigt wird, der Volumenstrom des Hauptstroms und des Teilstroms gemessen wird, die Trübung des Teilstroms bestimmt wird, stromabwärts davon das Umlademittel mit zeitlich variierender Menge zugegeben und anschließend davon wieder die Trübung bestimmt wird, daß aus der Änderung der Trübung durch das Umlademittel die optimale Dosierung bestimmt wird und diese im Verhältnis der Volumenströme im Hauptstrom vorgenommen wird.

Im Teilstrom wird Umlademittel hinzugefügt und dadurch eine Verringerung der Trübung festgestellt. Diese Verringerung ist nur verhältnismäßig klein und liegt im Bereich von typischerweise 1-3%. Diese äußerst kleine Änderung kann nun dadurch festgestellt werden, daß die Zugabe des Umlademittels zeitlich variiert wird, insbesondere periodisch variiert wird. Dabei wird ein Teil der Kurve abgetastet, die die Abhängigkeit der Trübungsreduzierung von der Umlademittelkonzentration angibt. Die entsprechende Funktion, d.h. die Trübungsreduzierung, steigt zunächst mit wachsendem Umlademittelanteil an, erreicht dann ein Maximum und fällt wieder ab, da bei zu großen Umlademittelmengen erneut eine stärkere Trübung stattfindet und auch Schaum auftritt. Durch die zeitliche Variation der Umlademitteldosierung läßt sich genau das Maximum dieser Kurve bestimmen, das dem neutralen Ladungszustand entspricht. Eine ideale Dosierung wird dann dem Hauptstrom zugeführt. Der so behandelte Hauptstrom kann dann der Papierproduktionslinie zugeführt werden.

Zweckmäßigerweise variiert die Zugabe des Dosiermittels im Teilstrom zeitlich sägezahnförmig oder aber sinusförmig.

Die Periode der Änderung beträgt dabei ungefähr 30 bis 300 Sekunden, vorteilhafterweise 60 bis 180 Sekunden. Die Erfassung der Messdaten wird in sehr kurzen Zeitabschnitten von z.B. 100 Millisekunden durchgeführt, um eine große Datenmenge zu erhalten, mit der dann eine Mittelung vorgenommen werden kann, um die Funktion zwischen Umlademitteldosierung und Trübungsreduzierung zu erhalten. Vorteilhafterweise wird der Hauptstrom nur mit einer Dosierung von 90% bis 99% bezogen auf den Trübungsreduzierungsmaximalwert versehen.

Die Erfindung wird im folgenden anhand einer vorteilhaften Ausführungsform unter Bezugnahme auf die beigefügten Zeichnungen beschrieben. Es zeigen:
- Fig. 1: eine grafische Darstellung der Abhängigkeit der Trübungsreduzierung von der Umlademitteldosierung; und
- Fig. 2: ein Funktionsschema des Verfahrens der Erfindung.

An verschiedenen Stellen der Papierproduktion anfallender Rückstoff wird in einem großen Behälter zwischengelagert. Vor der Zuführung zu den Papiermaschinen wird die Suspension mit einem Umlademittel versetzt.

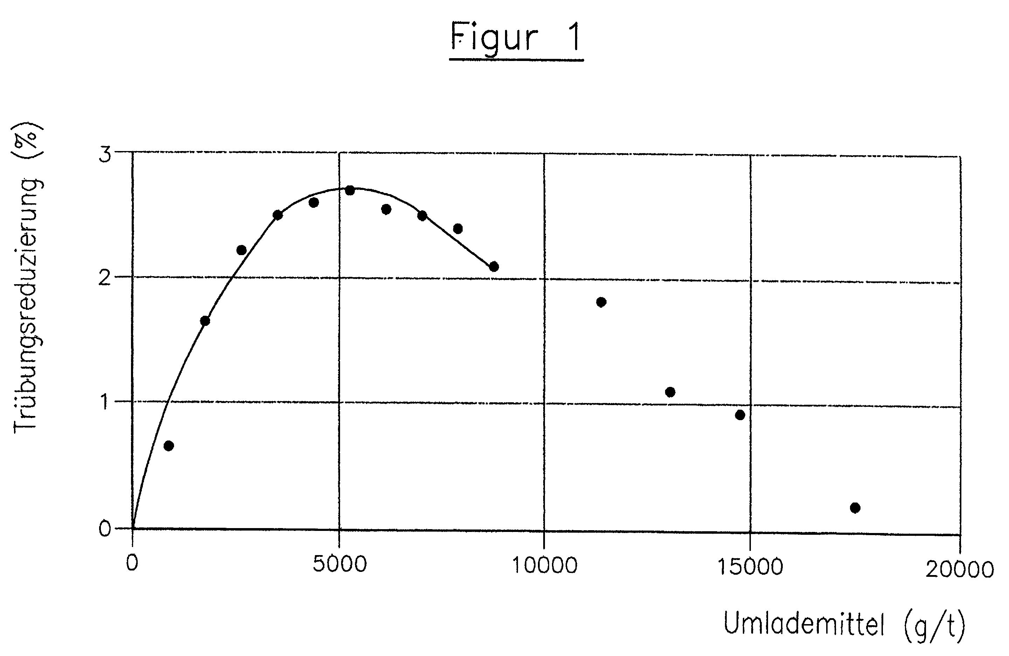

Durch die Zugabe des Umlademittels findet nun eine Trübungsreduzierung statt, wie dies in Fig. 1 gezeigt ist. Mit wachsender Umlademittelzugabe wächst die relative Trübungsreduzierung zunächst annähernd linear an, durchläuft dann eine gekrümmte Kurve und ein Maximum und sinkt mit größerer Umlademittelkonzentration wieder ab. Dabei wird lediglich eine relative Trübungsreduzierung im Bereich von 1 bis 3% erreicht. Diese kann aber genau bestimmt werden, indem die Umlademittelzugabe periodisch geändert wird, z.B. bei der Situation der Fig. 1 im Bereich von 2000 bis 7000 g/t. Mit wachsender Umlademittelzugabe wächst dann die Trübungsreduzierung zunächst an, erreicht ein Maximum und fällt wieder ab. Dieses Maximum kann mit elektronischen Mitteln sehr genau festgestellt werden, indem die Trübungsreduzierung z.B. alle 100 Millisekunden gemessen wird. Durch kontinuierliche, mathematische Ermittlung der Funktion kann der angestrebte Relativwert der Trübungsreduzierung bestimmt werden.

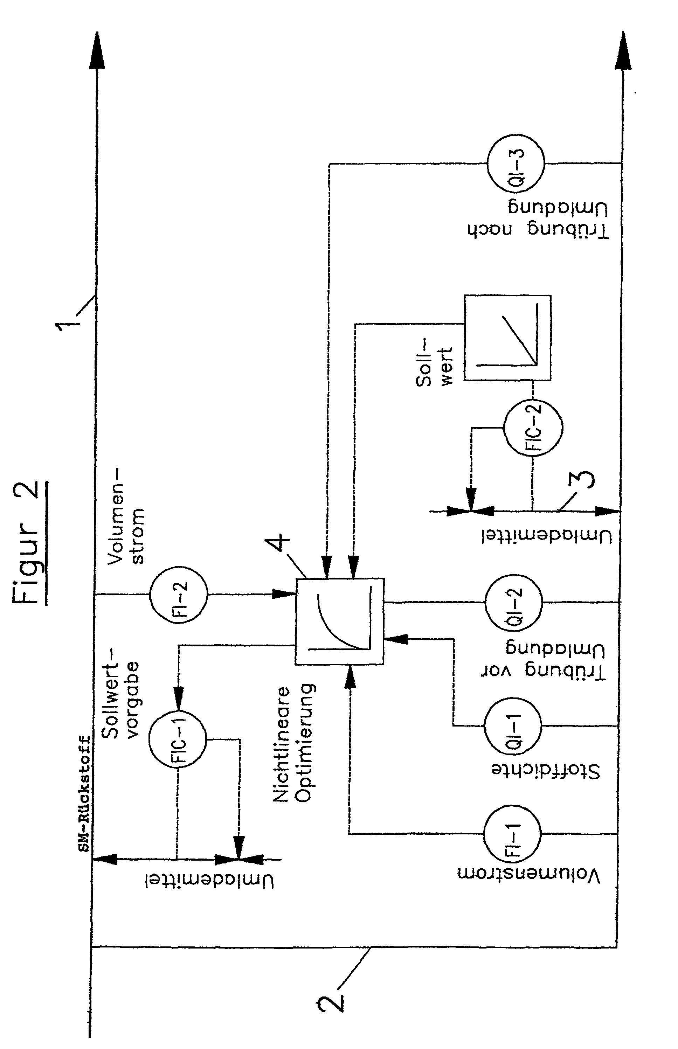

Dies geschieht nun gemäß Fig. 2 dadurch, daß von einem Hauptstrom 1 des Rückstoffs ein Teilstrom 2 abgezweigt wird. Der Rückstoff ist dabei als SM-Rückstoff bezeichnet, was bedeutet, daß er Papier aus Streichmaschinen enthält, wobei darin aber auch Rückstoff aus Naturpapier enthalten sein kann. Mit einem Meßgerät FI-1 wird der Volumenstrom und mit einem Meßgerät QI-1 die Stoffdichte des Teilstroms 2 gemessen. Mit einem Meßgerät QI-2 wird die Trübung vor der Umlademittelzugabe gemessen, die bei 3 erfolgt. Mit dem Gerät QI-3 wird die Trübung nach der Umladung gemessen. Die entsprechenden Geräte bzw. Sensoren sind mit einer elektronischen Einheit 4 verbunden, die die optimale Umlademitteldosierung für den Teilstrom 2 bestimmt. Zu diesem Zweck wird mit der Dosiereinrichtung FIC-2 die Menge des bei 3 zugegebenen Umlademittels periodisch geändert. Dadurch wird die Kurve der Fig. 1 abgefahren und die Umlademitteldosierung ermittelt, die die maximale Trübungsreduzierung ergibt. Die Umlademittelmenge, die notwendig ist um 90% bis 99% der maximalen Trübungsreduzierung zu erreichen, wird dem Hauptstrom als Sollwert vorgegeben.

Auf diese Weise wird erreicht, daß immer die optimale Dosierung mit Umlademittel stattfindet, selbst wenn sich der Anteil von Rückstoff von Streichmaschinenpapier stark ändert oder verschiedene gestrichene Papiersorten (matt, glänzend, usw.) im Rückstoff enthalten sind und sich die Mischung schnell und stark ändert.

Das Verfahren ist dabei besonders genau und zuverlässig, da nur relative Meßgrößen zur Auswertung verwendet werden. Es kommt nur auf die Umlademittelmenge an, die gewünschte Trübungsreduzierung ergibt. Wie groß diese Trübungsreduzierung ist, spielt keine Rolle.

Die Änderung der Dosierung im Hauptstrom 1 kann vollautomatisch erfolgen. Andererseits ist aber auch eine Steuerung von Hand aufgrund der im Teilstrom 2 erhaltenen Meßwerte möglich, um so die Dosierung an sich ändernde Bedingungen anzupassen.

## Patentansprüche

1. Verfahren zum Optimieren der Umlademitteldosierung von Rückstoff in Form einer Suspension von Fasern von in einer Streichmaschine behandeltem, erneut in die Produktionslinie einzubringenden Papier, **dadurch gekennzeichnet, daß** vom Hauptstrom des Rückstoffs ein Teilstrom abgezweigt wird, der Volumenstrom des Hauptstroms und des Teilstroms gemessen wird, die Trübung des Teilstroms bestimmt wird, stromabwärts davon das Umlademittel mit zeitlich variierender Menge zugegeben und anschließend davon wieder die Trübung bestimmt wird, daß an der Änderung der Trübung durch das Umlademittel die optimale Dosierung bestimmt wird und diese im Verhältnis der Massen- bzw. Volumenströme im Hauptstrom vorgenommen wird.

2. Verfahren nach Anspruch 1, **dadurch gekennzeichnet, daß** die Stoffdichte im Teilstrom gemessen wird.

3. Verfahren nach Anspruch 1 oder 2, **dadurch gekennzeichnet, daß** die Zugabe des Dosiermittels im Teilstrom zeitlich sägezahnförmig variiert.

4. Verfahren nach Anspruch 1 oder 2, **dadurch gekennzeichnet, daß** die Zugabe des Dosiermittels im Teilstrom sinusförmig variiert.

5. Verfahren nach Anspruch 3 oder 4, **dadurch gekennzeichnet, daß** die Periode der Änderung 20 bis 300 Sekunden beträgt.

6. Verfahren nach Anspruch 3 oder 4, **dadurch gekennzeichnet, daß** die Periode der Änderung 60 bis 180 Sekunden beträgt.

7. Verfahren nach einem der Ansprüche 1 bis 6, **dadurch gekennzeichnet, daß** eine Dosierung im Hauptstrom vorgenommen wird, die ca. 90 bis 99% des ermittelten Idealwerts entspricht.

## Claims

1. Method for optimising the dosage of fixing agent for broke stock in the form of a suspension of fibres of paper treated in a coating machine and to be reintroduced into the production line, **characterised in that** part of the main flow of the broke stock is diverted off, the volume of the main flow and of the part flow is measured, the turbidity of the part flow is determined, and downstream from this the fixing agent is added in amount varying with time and then the turbidity is again determined, the optimum dosage being determined by the change in the turbidity by the fixing agent and this being carried out in relation to the mass or volume flows in the main flow.

2. Method according to claim 1, **characterised by** the stock density in the part flow being measured.

3. Method according to claim 1 or 2, **characterised by** the addition of the dosing agent in the part flow varying in a zig-zag form with time.

4. Method according to claim 1 or 2, **characterised by** the addition of the dosing agent in the part flow varying sinusoidally.

5. Method according to claim 3 or 4, **characterised by** the period of the change being 20 to 300 seconds.

6. Method according to claim 3 or 4, **characterised by** the period of the change being 60 to 180 seconds.

7. Method according to one of the claims 1 to 6, **characterised by** a dosage being carried out in the main flow which corresponds to about 90 to 98% of the calculated ideal value.

## Revendications

1. Procédé pour optimiser le dosage du produit de transfert du résidu, sous la forme d'une suspension de fibres, d'un papier traité dans une machine à enduire, à réintroduire dans la ligne de production, **caractérisé en ce qu'**un courant partiel est dérivé du courant principal de résidu, le flux volumique du courant principal et du courant partiel est mesuré, la turbidité du courant partiel est déterminée, en aval de ceci, le produit de transfert est ajouté dans une quantité variable dans le temps et ensuite la turbidité est à nouveau déterminée, **en ce qu'**on détermine le dosage optimal à partir de la variation de la turbidité due au produit de transfert, et on procède à ce dosage proportionnellement aux flux de masse ou de volume dans le courant principal.

2. Procédé selon la revendication 1, **caractérisé en ce qu'**on mesure la consistance dans le courant partiel.

3. Procédé selon la revendication 1 ou 2, **caractérisé en ce que** l'ajout du produit de dosage dans le courant partiel varie dans le temps en dents de scie.

4. Procédé selon la revendication 1 ou 2, **caractérisé en ce que** l'ajout du produit de dosage dans le courant partiel varie de manière sinusoïdale.

5. Procédé selon la revendication 3 ou 4, **caractérisé en ce que** la période de la variation est de 20 à 300 secondes.

6. Procédé selon la revendication 3 ou 4, **caractérisé en ce que** la période de la variation est de 60 à 180 secondes.

7. Procédé selon l'une des revendications 1 à 6, **caractérisé en ce qu'**on procède à un dosage dans le courant principal qui correspond environ à 90 à 99 % de la valeur idéale déterminée.
